# EUROPÄISCHE PATENTANMELDUNG

(11) **EP 2 164 022 A1**
(43) Veröffentlichungstag der Anmeldung: **17.03.2010**
(21) Anmeldenummer: 08015463.6
(22) Anmeldetag: 02.09.2008
(51) Int. Cl.: G06F 21/24

(54) **Verfahren zur Einräumung einer Zugriffsberechtigung auf ein rechnerbasiertes Objekt in einem Automatisierungssystem, Computerprogramm und Automatisierungssystem**

(71) Anmelder: Siemens Aktiengesellschaft, 80333 München (DE)
(72) Erfinder: Herberth, Harald, 90522 Oberasbach (DE); Kröger, Ulrich, 67657 Kaiserslautern (DE); Sobihard, Allan, 84104 Bratislava (SK)

(57) **Zusammenfassung**

Zur Einräumung einer Zugriffsberechtigung auf ein rechnerbasiertes Objekt in einem Automatisierungssystem wird für ein in einer Datenbank einer Steuerungs- und Überwachungseinheit des Automatisierungssystems gespeichertes Objektmodell zur Zugriffsrechteinräumung eine graphische Repräsentation ermittelt. Die graphische Repräsentation des Objektmodells wird an einer graphischen Benutzerschnittstelle eines Rechners veränderbar bereitgestellt. Bei einer Änderung der graphischen Repräsentation des Objektmodells durch einen Benutzer wird eine Änderung des Objektmodells ermittelt und in der Datenbank gespeichert. Aus dem in der Datenbank gespeicherten Objektmodell wird eine entsprechend einem Schema für eine Auszeichnungssprache zur Zugriffsrechteinräumung strukturierte Steuerungsdatei für ein dem rechnerbasierten Objekt zugeordnetes Steuerungsprogramm erzeugt. Ein Zugriff auf das rechnerbasierte Objekt wird anhand der Steuerungsdatei durch das Steuerungsprogramm eingeräumt.

## Beschreibung

Aufgrund einer ständig steigenden Bedeutung von Informationstechnik für Automatisierungssysteme gewinnen Verfahren zur Sicherung von vernetzten Systemkomponenten wie Überwachungs-, Steuerungs- und Regelungseinrichtungen, Sensoren und Aktoren gegenüber unberechtigtem Zugriff verstärkt an Bedeutung. Im Vergleich zu anderen Anwendungsgebieten der Informationstechnik kommt Datenintegrität in der Automatisierungstechnik eine besonders hohe Bedeutung zu. Insbesondere bei einer Erfassung, Auswertung und Übermittlung von Meß- und Steuerungsdaten ist sicherzustellen, daß vollständige und unveränderte Daten vorliegen. Absichtliche, unabsichtliche oder durch einen technischen Fehler bedingte Veränderungen sind zu vermeiden. Besondere Anforderungen in der Automatisierungstechnik für sicherheitstechnische Verfahren resultieren außerdem aus einem Meldungsverkehr mit verhältnismäßig vielen, aber relativ kurzen Nachrichten. Daneben ist einer Echtzeitfähigkeit eines Automatisierungssystems und seiner Systemkomponenten Rechnung zu tragen.

Zur Definition von Sicherheitsrichtlinien und Zugriffsberechtigungen werden bisher vielfach Auszeichnungssprachen zur Darstellung hierarchisch strukturierter Daten in Form von Textdateien verwendet, die relativ einfach zwischen unterschiedlichen informationstechnischen Systemen ausgetauscht werden können, insbesondere über weitausgedehnte Netzwerke. Eine solche Auszeichnungssprache ist XACML (eXtensible Access Control Markup Language), die durch das OASIS-Konsortium für eine Darstellung und Verarbeitung von Autorisierungsrichtlinien standardisiert ist. Insbesondere dient XACML dazu, auswertbare Regeln zu erstellen, die einen Zugriff von Subjekten auf Ressourcen eines Systems steuern. Jedoch ist eine direkte Abbildung von Sicherheitsrichtlinien und Zugriffsberechtigungen aufgrund eines hohen Abstraktionsgrades zur Formulierung entsprechender Regelungen schwer handhabbar und infolgedessen durchaus fehleranfällig.

Für Automatisierungssysteme erstellte Regelungen für Zugriffsberechtigungen von Benutzern oder Geräten auf zu schützende Systemressourcen liegen üblicherweise bereits in Form eines Objektmodells vor. Um eine durchgängige Anwendung dieser Regelungen zu gewährleisten, ist eine Überführung des Objektmodells in eine allgemeingültigere Darstellung vorteilhaft. Jedoch ist eine derartige Transformation häufig sehr fehleranfällig und außerdem aufwendig.

Der vorliegenden Erfindung liegt daher die Aufgabe zugrunde, ein komfortables, sicheres und effizientes Verfahren zur Einräumung einer Zugriffsberechtigung auf ein rechnerbasiertes Objekt in einem Automatisierungssystem zu schaffen, sowie eine geeignete technische Realisierung des Verfahrens anzugeben.

Diese Aufgabe wird erfindungsgemäß durch ein Verfahren mit den in Anspruch 1 angegebenen Merkmalen, durch ein Computerprogramm mit den in Anspruch 9 angegebenen Merkmalen sowie durch ein Automatisierungssystem mit den in Anspruch 10 angegebenen Merkmalen gelöst. Vorteilhafte Weiterbildungen der vorliegenden Erfindung sind in den abhängigen Ansprüchen angegeben.

Erfindungsgemäß wird zur Einräumung einer Zugriffsberechtigung auf ein rechnerbasiertes Objekt in einem Automatisierungssystem zunächst für ein in einer Datenbank einer Steuerungs- und Überwachungseinheit des Automatisierungssystems gespeichertes Objektmodell zur Zugriffsrechteinräumung eine graphische Repräsentation ermittelt. Die Steuerungs- und Überwachungseinheit kann beispielsweise ein Engineering-System zur Konfiguration, Wartung, Inbetriebnahme und/oder Dokumentation des Automatisierungssystems sein. Die graphische Repräsentation des Objektmodells wird an einer graphischen Benutzerschnittstelle eines Rechners veränderbar bereitgestellt. Dabei kann auch der Rechner einem Engineering-System zugeordnet sein. Bei einer Änderung der graphischen Repräsentation des Objektmodells durch einen Benutzer wird eine Änderung des Objektmodells ermittelt und in der Datenbank gespeichert. Aus dem in der Datenbank gespeicherten Objektmodell wird eine entsprechend einem Schema für eine Auszeichnungssprache zur Zugriffsrechteinräumung strukturierte Steuerungsdatei für ein dem rechnerbasierten Objekt zugeordnetes Steuerungsprogramm erzeugt. Anhand der Steuerungsdatei wird durch das Steuerungsprogramm ein Zugriff auf das rechnerbasierte Objekt eingeräumt.

Die erfindungsgemäße Lösung bietet den Vorteil, daß Entwurfs-und Implementierungsaufwände für Zugriffskontrollrichtlinien in einem Automatisierungssystem deutlich reduziert werden können. Insbesondere Änderungen an einem Objektmodell zur Zugriffsrechteinräumung können schnell und einfach in einer standardisierten portablen Darstellungsform abgebildet werden. Ein weiterer Vorteil liegt darin, daß mit der erfindungsgemäßen Lösung Fehler bei einer Überführung des Objektmodells in eine standardisierte Darstellungsform weitestgehend vermieden werden können.

Rechnerbasierte Objekte sind beispielsweise ohne Beschränkung der Allgemeinheit dieses Begriffs Betriebssysteme, Steuerungs- oder Anwendungsprogramme, durch Betriebssysteme, Steuerungs- oder Anwendungsprogramme bereitgestellte Dienste, Leistungsmerkmale, Funktionen oder Prozeduren, Zugriffsrechte auf Peripheriegeräte sowie auf einem Speichermedium befindliche Daten. Funktionen oder Prozeduren umfassen dabei insbesondere auch eine Freigabe von Zugriffsberechtigungen in einem Automatisierungssystem. Unter einem Rechner sind beispielsweise PCs, Notebooks, Server, PDAs, Mobiltelefone sowie Steuerungs- und Regelungsmodule, Sensoren oder Aktoren in der Automatisierungs-, Fahrzeug-, Kommunikations- oder Medizintechnik zu verstehen - allgemein Einrichtungen, in denen Computerprogramme ablaufen. Die Steuerungsdatei kann darüber hinaus auch eine DLL-Datei (Dynamic Link Library) bzw. ein Programmcode umfassendes Shared Objekt sein, das statisch oder dynamischer mit dem Steuerungsprogramm gebunden wird.

Anhand des Steuerungsprogramms kann beispielsweise ein Dienst des Automatisierungssystems innerhalb einer dienstorientierten Architektur bereitgestellt werden. Dienstorientierte bzw. serviceorientierte Architekturen (SOA) zielen darauf ab, Dienste in komplexen Organisationseinheiten zu strukturieren und für eine Vielzahl von Nutzern verfügbar zu machen. Dabei werden beispielsweise vorhandene Komponenten eines Datenverarbeitungssystems, wie Programme, Datenbanken, Server oder Websites, so koordiniert, daß von den Komponenten bereitgestellte Leistungen zu Diensten zusammen gefaßt und berechtigten Nutzern zur Verfügung gestellt werden. Serviceorientierte Architekturen ermöglichen eine Anwendungsintegration, indem Komplexität einzelner Teilkomponenten eines Datenverarbeitungssystems hinter standardisierten Schnittstellen verborgen wird. Hierdurch lassen sich wiederum Zugriffsberechtigungsregelungen vereinfachen.

Die Erfindung wird nachfolgend an einem Ausführungsbeispiel anhand der Zeichnung näher erläutert. Es zeigt
- Figur 1: ein Ablaufdiagramm für ein Verfahren zur Einräumung einer Zugriffsberechtigung auf ein rechnerbasiertes Objekt in einem Automatisierungssystem,
- Figur 2: eine schematische Darstellung eines Automatisie- rungssystems zur Realisierung des Verfahrens gemäß Figur 1.

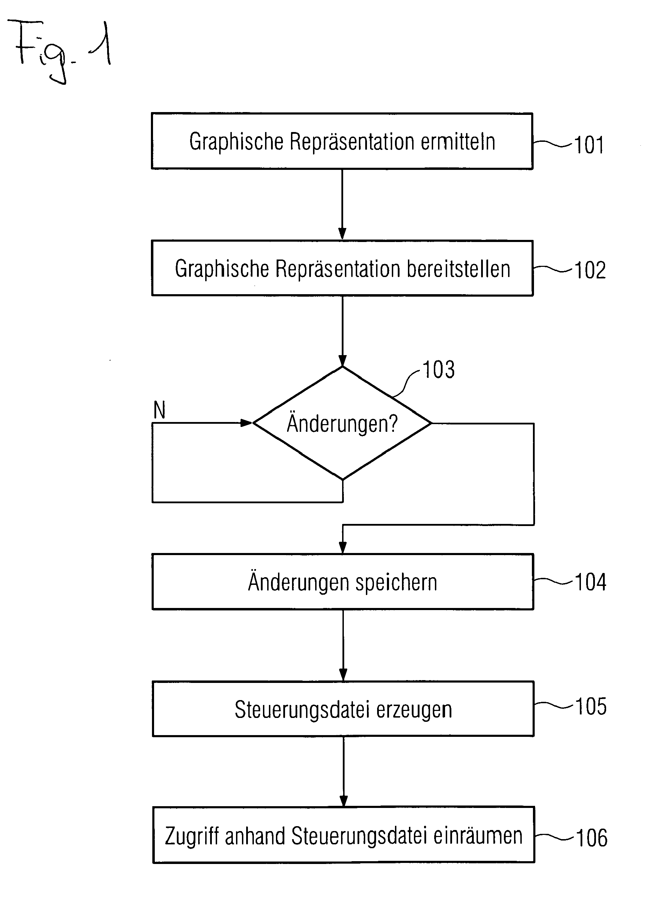

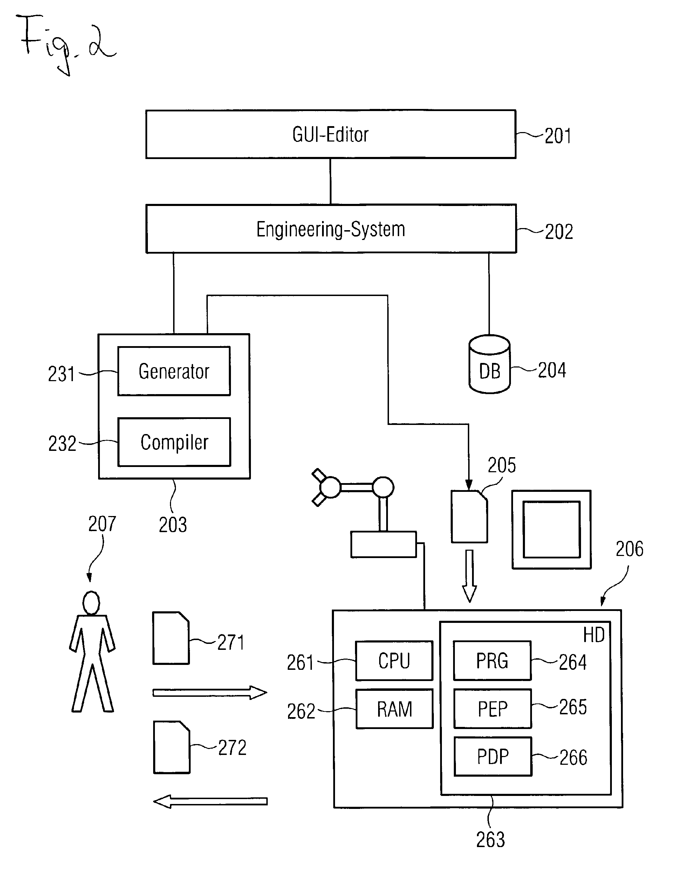

Entsprechend dem in Figur 1 veranschaulichten Verfahren wird zur Einräumung einer Zugriffsberechtigung auf ein rechnerbasiertes Objekt zunächst für ein in einer Datenbank 204 einer Steuerungs- und Überwachungseinheit 202 des in Figur 2 dargestellten Automatisierungssystems gespeichertes Objektmodell zur Zugriffsrechteinräumung eine graphische Repräsentation ermittelt (Schritt 101).

Zur Definition eines Objektmodells werden vorzugsweise zunächst sämtliche zu sichernden Ressourcen identifiziert. Ressourcen sind beispielsweise Dateien, Objekte, Dienste, Komponenten oder Schnittstellen. Für die identifizierten Ressourcen können dann Abschätzungen vorgenommen werden, in welcher Menge die jeweiligen Ressourcen vorliegen. Dabei können unterschiedliche Ressourcen auch zu Ressourcengruppen zusammengefaßt werden. Anschließend sind in bezug auf die identifizierten Ressourcen Subjekte und von diesen hinsichtlich der Ressourcen vorgenommene Aktionen zu identifizieren. Hinsichtlich einer Einbeziehung von Subjekten in das Objektmodell ist zu beachten, daß bei einer Änderung einer Zuordnung zwischen einem Subjekt und einem Recht zum Zugriff auf eine Ressource entsprechende Änderungen zur Laufzeit erforderlich sind. Wenn Änderungen zur Laufzeit vermieden werden sollen, wird eine Zuordnung zwischen Subjekt und Zugriffsrecht vorteilhafterweise außerhalb des Objektmodells vorgenommen. Nach Identifikation von Objekten des Objektmodells werden vorzugsweise noch Attribute festgelegt, durch welche Vergaben von Zugriffsrechten beeinflußt werden. Zu diesen Attributen zählen beispielsweise Datum, Zeit, für Zugriff verwendete Rechnereinheit sowie statische oder dynamische Bedingungen.

Bei einer Ermittlung einer graphischen Repräsentation eines Objektmodells kann festgelegt werden, welche Objekte des Objektmodells sinnvollerweise an einer Benutzerschnittstelle dargestellt werden sollen, oder welche Objekt vor Bedienern an der Benutzerschnittstelle zu verbergen sind. Hierbei kann außerdem berücksichtigt werden, welche Objekte des Objektmodells automatisch bzw. regelbasiert instantiiert werden können.

Im vorliegenden Ausführungsbeispiel handelt es sich bei der Steuerungs- und Überwachungseinheit 202 um ein Engineering-System zur Konfiguration, Wartung, Inbetriebnahme und Dokumentation des Automatisierungssystems. Außerdem ist das rechnerbasierte Objekt ein Meßergebnis 272, das durch eine computergestützte Sensoreinheit 206 erfaßt wird und von einem Benutzer 207 des Automatisierungssystems mittels einer Abfrage 271 angefordert wird. Der Benutzer 207 kann auch ein anderes Gerät innerhalb des Automatisierungssystems sein.

Die Sensoreinheit 206 umfaßt einen Prozessor 261, einen Arbeitsspeicher 262 und eine Festplatte 263 als nichtflüchtigen Speicher. Auf der Festplatte 263 ist ein Steuerungsprogramm 264 zur Ansteuerung von meßtechnischer Peripherie der Sensoreinheit 206 gespeichert, dessen Programmcode in den Arbeitsspeicher 262 ladbar und durch den Prozessor 261 ausführbar ist. Das Steuerungsprogramm 264 ist jedoch nur durch einen hierzu berechtigten Benutzer ausführbar, bzw. ein infolge eines Ablaufs des Steuerungsprogramms 264 erfaßtes Meßergebnis ist nur durch einen berechtigten Benutzer abfragbar. Zur Berechtigungsüberprüfung und Zugriffseinräumung sind auf der Festplatte 263 gespeicherte Kontrollprogramme 265, 266 vorgesehen, deren Programmcode bei Ablauf in der Sensoreinheit 206 einen Policy Enforcement Point und einen Policy Decision Point implementiert. Der Policy Decision Point dient als Entscheidungsinstanz einer Überprüfung, ob eine Ressourcenanforderung eines Benutzers entsprechend einer durch das in der Datenbank 204 als Policy Store gespeicherte Objektmodell beschriebene Zugriffskontrollrichtlinie berechtigt ist. Entsprechend einem durch den Policy Decision Point ermittelten Überprüfungsergebnis erfolgt durch den Policy Enforcement Point als Freigabeinstanz eine Freigabe oder Sperrung der angeforderten Ressource gegenüber dem jeweiligen Benutzer.

Nach einer Ermittlung der graphischen Repräsentation des Objektmodells erfolgt entsprechend Schritt 102 ihre Bereitstellung an einer graphischen Benutzerschnittstelle 201 des Engineering Systems 202 zur Editierung durch einen Benutzer. Die Benutzerschnittstelle 201 implementiert dabei gängige graphische Editorfunktionen, wie Drag & Drop und Cut & Paste. Durch das Engineering-System 202 wird fortlaufend überprüft, ob eine Änderung der graphischen Repräsentation des Objektmodells durch einen Benutzer vorgenommen wurde (Schritt 103). Bei Ermittlung einer Änderung der graphischen Repräsentation des Objektmodells veranlaßt das Engineering-System 202 entsprechend Schritt 104 deren Speicherung in der Datenbank 204.

Des weiteren erzeugt eine dem Engineering-System 202 zugeordnete Umwandlungseinheit 203 bei einer Änderung der graphischen Repräsentation des Objektmodells eine entsprechend einem Schema für eine Auszeichnungssprache zur Zugriffsrechteinräumung strukturierte Steuerungsdatei 205 für das Steuerungsprogramm 264 (Schritt 105). Dabei übernimmt ein Generator 231 der Umwandlungseinheit 203 primäre Umsetzungsaufgaben für das Objektmodell, während ein Compiler 232 der Umwandlungseinheit 203 laufzeitabhängige Parameter für das Steuerungsprogramm 264 berücksichtigt und für die Steuerungsdatei 205 vorgibt. Die Steuerungsdatei 205 wird dann in der Datenbank 204 zum Abruf durch die Sensoreinheit 206 gespeichert.

Das Schema für ein Erzeugen der Steuerungsdatei 205 ist durch XACML (eXtensible Access Control Markup Language) beschrieben. Auf diese Weise bildet die Steuerungsdatei 205 eine hierarchische Baumstruktur ab, die Regeln umfassende Policies und Policies umfassende Policy Sets als in hierarchisch aufsteigender Bedeutung Regelungselemente aufweist. Eine Policy umfaßt dabei ein Kontrollelement (Target), in der für eine Überprüfung einer Anwendbarkeit der Policy ein ressourcenanfordernder Benutzer (Subject), eine angeforderte Ressource (Resource) und eine Benutzungshandlung (Action) festgelegt sind. Bei Anwendbarkeit einer Policy wird anhand eines von einer Regel (Rule) der Policy umfaßten Bedingungselements (Condition) überprüft, ob eine in der Regel angegebene Entscheidung über eine Einräumung einer Zugriffsberechtigung festgelegt ist. Eine Auflösung mehrerer gleichzeitig anwendbarer Policies erfolgt mittels Combining-Algorithmen, so daß auf jeden Fall eine abschließende Entscheidung über eine Freigabe oder eine Sperrung einer Ressource getroffen wird. Vorzugsweise werden Combining-Algorithmen für jede Hierarchieebene angewendet.

Vorteilhafterweise umfassen auch Regeln und Policy Sets Kontrollelemente zur Überprüfung ihrer Anwendbarkeit. Jedoch weisen nur Regeln Bedingungselemente auf. Bei einem Erzeugen der Steuerungsdatei 205 aus dem in der Datenbank 204 gespeicherten Objektmodell werden außerdem vorzugsweise allen Elementen des Objektmodells jeweils korrespondierende Bedingungselemente, Regeln, Policies und/oder Policy Sets für die Steuerungsdatei zugeordnet.

Entsprechend dem in Figur 1 dargestellten Ablaufdiagramm erfolgt gemäß Schritt 106 durch das Steuerungsprogramm 264 abschließend eine Einräumung bzw. Verweigerung eines Zugriffs auf das Meßergebnis 272 als rechnerbasiertes Objekt anhand der Steuerungsdatei 205.

Das vorangehend beschriebene Verfahren wird vorzugsweise durch ein in einen Arbeitsspeicher des Engineering-Systems 202 ladbares Computerprogramm implementiert. Das Computerprogramm weist zumindest einen Codeabschnitt auf, bei dessen Ausführung für ein in einer Datenbank einer Steuerungs- und Überwachungseinheit eines Automatisierungssystems gespeichertes Objektmodell zur Zugriffsrechteinräumung eine graphische Repräsentation ermittelt wird, wenn das Computerprogramm im Rechner abläuft. Außerdem wird die graphische Repräsentation des Objektmodells an einer graphischen Benutzerschnittstelle eines Rechners veränderbar bereitgestellt. Bei einer Änderung der graphischen Repräsentation des Objektmodells durch einen Benutzer wird eine Änderung des Objektmodells ermittelt und in der Datenbank gespeichert. Aus dem in der Datenbank gespeicherten Objektmodell wird abschließend eine entsprechend einem Schema für eine Auszeichnungssprache zur Zugriffsrechteinräumung strukturierte Steuerungsdatei für ein dem rechnerbasierten Objekt zugeordnetes Steuerungsprogramm erzeugt.

Das oben beschriebene Verfahren läßt sich in bezug auf seine Leistungsfähigkeit durch Anpassung der durch die Steuerungsdatei abgebildeten Baumstruktur optimieren. Da Policy-Bäume schnell mehr als 1000 Knoten umfassen können, sollte regelmäßig überprüft werden, daß die Baumstruktur nicht mehr als 10-20 Hierarchieebenen aufweist. Falls Knoten innerhalb der Baumstruktur nur eine geringe Anzahl an Verzeigungen aufweisen, beispielsweise weniger als 5, so ist keine weitere Anpassung der Baumstruktur erforderlich.

Liegt dagegen eine größere Anzahl an Verzeigungen vor, so sollten zunächst bei einer Traversierung der Baumstruktur für eine Ressourcenanforderung spezifizierte Target-Parameter wie Subject, Resource und Action zur Ausblendung irrelevanter Verzweigungen verwendet werden. Können auch durch eine Verwendung von Target-Parametern nicht sämtliche irrelevanten Verzweigungen ausgeblendet werden, so sollte der jeweilige Knoten innerhalb der Baumstruktur so aufgespaltet und auf mehrere Hierarchieebenen verteilt werden, daß unter Verwendung der Target-Parameter nur jeweils eine Verzweigung als relevant identifizierbar ist.

Ergibt eine Traversierung der Baumstruktur für die verwendeten Target-Parameter in bezug auf einen ausgewählten Knoten keine Übereinstimmung, sollte die Anzahl an Verzweigungen gering sein. Falls dies nicht der Fall ist, sollte sich für zumindest einen an die Verzweigungen anschließenden Knoten auf einer niedrigeren Hierarchieebene eine Übereinstimmung ergeben. Andernfalls sollte eine neue Hierarchieebene eingeführt werden, die eine Übereinstimmung ergibt. Darüber hinaus besteht auch die Möglichkeit, bestehende Knoten auf andere Hierarchieebenen zu verschieben oder Knoten unterschiedlicher Hierarchieebenen zu tauschen.

Die Anwendung der vorliegenden Erfindung ist nicht auf das beschriebene Ausführungsbeispiel beschränkt.

## Patentansprüche

1. Verfahren zur Einräumung einer Zugriffsberechtigung auf ein rechnerbasiertes Objekt in einem Automatisierungssystem, bei dem
- für ein in einer Datenbank einer Steuerungs- und Überwachungseinheit des Automatisierungssystems gespeichertes Objektmodell zur Zugriffsrechteinräumung eine graphische Repräsentation ermittelt wird,
- die graphische Repräsentation des Objektmodells an einer graphischen Benutzerschnittstelle eines Rechners veränderbar bereitgestellt wird,
- bei einer Änderung der graphischen Repräsentation des Objektmodells durch einen Benutzer eine Änderung des Objektmodells ermittelt und in der Datenbank gespeichert wird,
- aus dem in der Datenbank gespeicherten Objektmodell eine entsprechend einem Schema für eine Auszeichnungssprache zur Zugriffsrechteinräumung strukturierte Steuerungsdatei für ein dem rechnerbasierten Objekt zugeordnetes Steuerungsprogramm erzeugt wird,
- ein Zugriff auf das rechnerbasierte Objekt anhand der Steuerungsdatei durch das Steuerungsprogramm eingeräumt wird.

2. Verfahren nach Anspruch 1,
bei dem die Steuerungs- und Überwachungseinheit ein Engineering-System zur Konfiguration, Wartung, Inbetriebnahme und/oder Dokumentation des Automatisierungssystems ist.

3. Verfahren nach einem der Ansprüche 1 oder 2,
bei dem das Schema für ein Erzeugen der Steuerungsdatei durch eine als XACML bekannte erweiterbare Zugriffskontroll-Auszeichnungssprache beschrieben ist.

4. Verfahren nach Anspruch 3,
bei dem die Steuerungsdatei eine hierarchische Baumstruktur abbildet, die Regeln umfassende Policies und Policies umfassende Policy Sets als in hierarchisch aufsteigender Bedeutung Regelungselemente aufweist, und bei dem eine Policy ein Kontrollelement umfaßt, in der für eine Überprüfung einer Anwendbarkeit der Policy ein ressourcenanfordernder Benutzer, eine angeforderte Ressource und eine Benutzungshandlung festgelegt sind, und bei dem bei Anwendbarkeit einer Policy anhand eines von einer Regel der Policy umfaßten Bedingungselements überprüft wird, ob eine in der Regel angegebene Entscheidung über eine Einräumung einer Zugriffsberechtigung festgelegt wird.

5. Verfahren nach Anspruch 4,
bei dem bei einem Erzeugen der Steuerungsdatei aus dem in der Datenbank gespeicherten Objektmodell allen Elementen des Objektmodells jeweils korrespondierende Bedingungselemente, Regeln, Policies und/oder Policy Sets für die Steuerungsdatei zugeordnet werden.

6. Verfahren nach einem der Ansprüche 4 oder 5,
bei dem auch Regeln und Policy Sets Kontrollelemente zur Überprüfung ihrer Anwendbarkeit aufweisen.

7. Verfahren nach einem der Ansprüche 4 bis 6,
bei dem nur Regeln Bedingungselemente aufweisen.

8. Verfahren nach einem der Ansprüche 4 bis 7,
bei dem eine Anzahl von Hierarchieebenen der Baumstruktur ermittelt wird, und bei dem die Baumstruktur hinsichtlich ihrer Hierarchieebenen bei einer über einem Schwellwert liegenden Hierarchieebenenanzahl reduziert wird.

9. Verfahren nach einem der Ansprüche 4 bis 8,
bei dem eine Anzahl von Knotenverzweigungen innerhalb der Baumstruktur ermittelt wird, und bei dem bei einer über einem Schwellwert liegenden Verzweigungsanzahl zur Traversierung der Baumstruktur für eine Ressourcenanforderung spezifizierte Target-Parameter zur Ausblendung irrelevanter Verzweigungen verwendet werden.

10. Verfahren nach einem der Ansprüche 4 bis 8,
bei dem eine Anzahl von Knotenverzweigungen innerhalb der Baumstruktur ermittelt wird, und bei dem ein Knoten bei einer über einem Schwellwert liegenden Verzweigungsanzahl innerhalb der Baumstruktur so aufgespaltet und auf mehrere Hierarchieebenen verteilt wird, daß unter Verwendung von Target-Parametern nur jeweils eine Verzweigung als relevant identifizierbar ist

11. Verfahren nach einem der Ansprüche 1 bis 10,
bei dem anhand des Steuerungsprogramms ein Dienst des Automatisierungssystems innerhalb einer dienstorientierten Architektur bereitgestellt wird.

12. Computerprogramm zur Einräumung einer Zugriffsberechtigung, das in einen Arbeitsspeicher eines Rechners ladbar ist und zumindest einen Codeabschnitt aufweist, bei dessen Ausführung
- für ein in einer Datenbank einer Steuerungs- und Überwachungseinheit eines Automatisierungssystems gespeichertes Objektmodell zur Zugriffsrechteinräumung eine graphische Repräsentation ermittelt wird,
- die graphische Repräsentation des Objektmodells an einer graphischen Benutzerschnittstelle eines Rechners veränderbar bereitgestellt wird,
- bei einer Änderung der graphischen Repräsentation des Objektmodells durch einen Benutzer eine Änderung des Objektmodells ermittelt und in der Datenbank gespeichert wird,
- aus dem in der Datenbank gespeicherten Objektmodell eine entsprechend einem Schema für eine Auszeichnungssprache zur Zugriffsrechteinräumung strukturierte Steuerungsdatei für ein dem rechnerbasierten Objekt zugeordnetes Steuerungsprogramm erzeugt wird,
wenn das Computerprogramm im Rechner abläuft.

13. Automatisierungssystem mit
- einer Steuerungs- und Überwachungseinheit, der eine Datenbank zugeordnet ist, in der ein Objektmodell zur Einräumung einer Zugriffsberechtigung für ein rechnerbasiertes Objekt gespeichert ist,
- einer graphischen Benutzerschnittstelle zur Bereitstellung einer an der graphischen Benutzerschnittstelle veränderbaren graphische Repräsentation des Objektmodells,
- einer der graphischen Benutzerschnittstelle zugeordneten Rechnereinheit zur Ermittlung einer Änderung der graphischen Repräsentation des Objektmodells und zur Veranlassung einer Speicherung einer Änderung des Objektmodells in der Datenbank der Steuerungs- und Überwachungseinheit,
- einer Umwandlungseinheit zum Erzeugen einer Steuerungsdatei, die entsprechend einem Schema für eine Auszeichnungssprache zur Zugriffsrechteinräumung strukturiert ist, aus dem in der Datenbank gespeicherten Objektmodell, - einem dem rechnerbasierten Objekt zugeordneten Steuerungsprogramm zur Einräumung einer Zugriffsberechtigung für das rechnerbasierte Objekt anhand der Steuerungsdatei.
